# EUROPEAN PATENT APPLICATION

(11) **EP 3 187 318 A1**
(43) Date of publication of application: **05.07.2017**
(21) Application number: 16204777.3
(22) Date of filing: 16.12.2016
(51) Int. Cl.: B26D 7/32, B65H 5/02, B65G 15/14

(54) **APPARATUS FOR STAGGERING OR SEPARATING SLICES**

(30) Priority: 30.12.2015 IT UB20159754
(71) Applicant: Grasselli S.p.A., 42020 Albina (RE) (IT)
(72) Inventor: GRASSELLI, Giorgio, 42020 Albinea (RE) (IT)
(74) Representative: Gagliardelli, Fabrizio

(57) **Abstract**

The apparatus (1) for staggering or separating slices, particularly obtainable by cutting a product (P) such as meat, poultry, fish, vegetables or the like comprises: a conveyor (2) for transporting the cut product (P) and predisposed for moving the product (P) forward at a first speed (V1) and a staggering device (3), comprising a movable contact surface (30) adapted to touch the sliced product (P) and predisposed to move at a second speed (V2), the ratio between the first speed (V1) and second speed (V2) being such as to obtain the staggering or separation of the slices of the product (P).

## Description

The present invention relates to an apparatus for staggering or separating slices, particularly obtainable by cutting a product such as meat, poultry, fish, vegetables, either raw or cooked, preferably without bones or cartilage.

In even more detail, the invention relates to an automated apparatus adapted for the staggering or separation of slices through the use of industrial slicers.

Industrial slicers are known, used to process food products designed, for example, for large scale retail, for school or company canteens, or for catering.

A known type of slicer, which is known in technical jargon as a "multi-blade slicer", comprises a cutting station arranged downstream of a conveying section comprising a conveyor belt for conveying the product to the cutting station.

The cutting station comprises a plurality of blades, placed in movement simultaneously, under whose blades the conveyor belt extends, so that the product is pushed into contact with the blades and is therefore automatically cut into slices.

This type of machine is present on the market in different models, based on which the blades may be assembled in the horizontal or vertical position and the product can be loaded manually or through a conveyor belt.

After passing through the blades, the product is conformed as a compact group of cut slices.

The slices thus obtained are directed to the packaging stations.

In these stations, there are specialist operators who have the task of picking up the compact group of slices and dividing it, arranging the individual slices in trays of various sizes which will then be packaged. Without the separation step, it would not be possible, first of all, to detect any internal product defects, particularly differences in colour or clots of blood that are instead very clear on the individual slices.

Furthermore, if such separation were not performed, it would not be possible to discard slices that are damaged by processing or, in general, not compliant with the required quality standard.

In particular, it may happen that, due to the anatomical shape of the product, the cutting process generates slices that are "split" into various parts that would not be acceptable to today's market.

It may also happen that, due to the mechanical cutting process, some parts of the product are damaged.

Also in this case, there must be an assessment and if necessary removal of the non-compliant slice.

Furthermore, if the slices are not separated or staggered in the container, it would not be possible for consumers to check the effective size of the slices they are buying.

In practice, given the minimum thickness of the cutting blades, generally 0.5 mm, and due to the elastic effect of the meat which after cutting tends to "close up", the compact group of slices just cut is too similar to the uncut product.

Therefore, without the separation step, it would be very difficult to be able to assess the thickness of the individual slices and it would be almost impossible to assess the effective size, especially by a general and non-expert consumer.

Multi-blade slicers currently require the use of specialist labour for performing this very important separation step for separating the cut slices. However, this known solution implies some drawbacks.

In fact, first of all, the production volumes created with a multi-blade slicer are such that, generally, for the final handling of the slices, from five to fifteen people are needed, according to the type and model of slicer used. This number of operators, above all, implies a non-negligible risk of contamination.

In fact, it is known that the operators constitute in themselves a significant source of contamination.

Furthermore, considering the number of operators required, the handling line will be rather long, which implies that the slices remain exposed to the air for a sufficient amount of time to have a significant effect on the risk of contamination.

Furthermore, it should be considered that the handling activity constitutes a health risk for the operator, since he must operate on products that present a temperature that does not exceed 4 °C, which is considered extremely wearing by occupational medicine.

Finally, the actual fact of having to use large numbers of labour has a significant effect on production costs.

The technical task underlying the present invention is therefore to propose an apparatus predisposed to automatically perform the staggering or separation of slices, especially but not exclusively obtained starting from a product such as meat, fish or vegetables, able to overcome the drawbacks of the prior art described above.

The technical task is reached by the apparatus provided in accordance with claim 1.

Further characteristics and advantages of the present invention will become more apparent from the following indicative, and hence non-limiting, description of a preferred, but not exclusive, embodiment of an apparatus as illustrated in the appended drawings, in which:
- figure 1 is an axonometric view of the apparatus according to the invention;
- figure 2 is an enlarged view of a detail of figure 1;

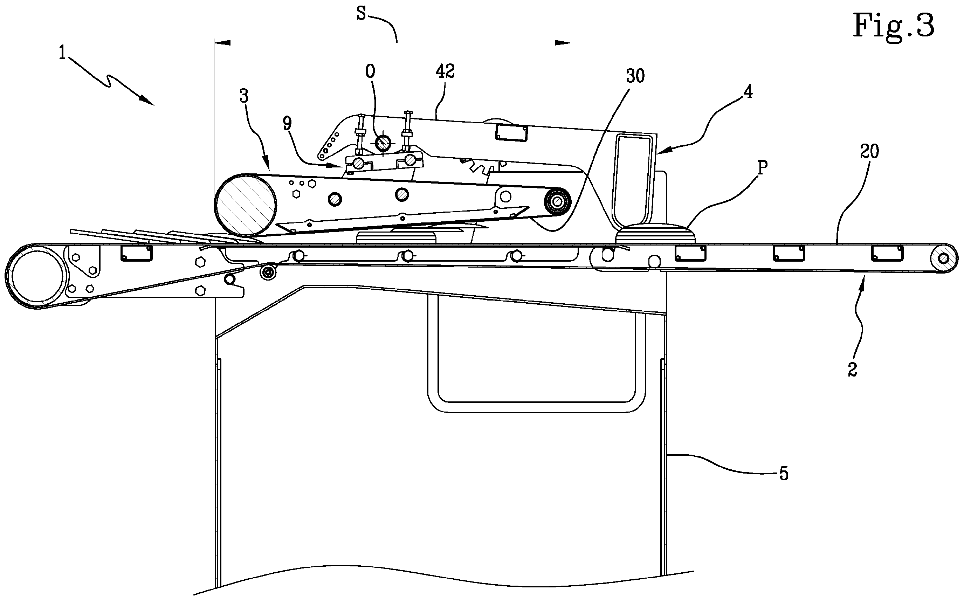

- figure 3 is a lateral sectional view of the apparatus;
- figure 4 is an enlarged view of a detail of figure 3; and
- figures 5 and 6 are lateral views of the apparatus in two different operating configurations.

With reference to the above-mentioned figures reference numeral 1 indicates a staggering apparatus according to the invention.

The apparatus 1 proposed was designed to perform the staggering or separation of the slices in which a product P such as meat, poultry, fish, vegetables or the like, was cut,

In the present description, "staggering" means the operation according to which the slices of the cut product P, initially arranged along one direction, for example superimposed and stacked or alongside one another, are disconnected so as to be only partially overlapping.

In other words, the cut products that reach the apparatus 1 according to the invention have been separated into slices without this having had a substantial effect on the shape of the product P, due to the elasticity and natural adhesion properties of the material, in particular meat.

In detail, if we think about the case of a product P cut into horizontal slices piled on top of one another, the last slice completely covers the penultimate slice below it, except for the external perimetrical edge and, in turn, the penultimate slice covers the last but second slice, and so on. The invention is able to arrange the slices so as to uncover in part or in full the upper surface of each slice, in an orderly way, so as to make them ready for placing into the final tray.

In the present description, "separation" means the operation according to which the slices of cut product P are detached and are no longer intersecting; in practice, separation may be considered as a borderline of staggering.

In detail, the invention was designed to obtain both the staggering and separation of the slices; such uses of the apparatus 1 proposed and others, shall be explored in detail below as part of the explanation of the operation of the invention.

In the following, for illustrative convenience and without losing in general terms, reference will be made to the case in which the product P sliced is meat.

Furthermore, for the same reasons, reference shall be made to the exemplifying case in which the product P has been cut into parallel slices piled on top of each other, especially by an industrial slicer with horizontal blades.

The apparatus 1 according to the invention was designed to be usable both in stand alone mode (as shown in the appended figures), arranged downstream of the slicer, and integrated into a slicer, defining a single machine therewith.

The apparatus 1 proposed comprises above all a conveyor 2, preferably a conveyor belt, provided to transport the sliced product P along a forward direction, at a first speed V1.

The conveyor belt 2 may be of the type wound in a loop around an idle roller and a motorized roller.

In the case of the apparatus 1 being stand alone, the conveyor 2 may define the longitudinal dimensions of the whole apparatus 1; in the case of the apparatus 1 being integrated into the cutting machine, the conveyor 2 may be the same conveyor that brings the whole product through a cutting station, placed upstream of the apparatus 1, where it is cut into the slices to be staggered or separated.

The apparatus 1 also includes a support pallet 5, or lower frame, which supports the conveyor 2 and other components of the invention, as well as further supports and frames that will be detailed below.

In the case of a conveyor belt 2 a, the latter defines an upper conveying surface 20 on which the product P rests, which is drawn along the apparatus 1.

The inclination and forward speed of the conveyor belt 2 are connected with the cutting line arranged upstream; in practice, the conveying surface 20 of the belt may be horizontal as in the appended figures or inclined and the forward speed V1 is preferably the same or close to that of the cutting line.

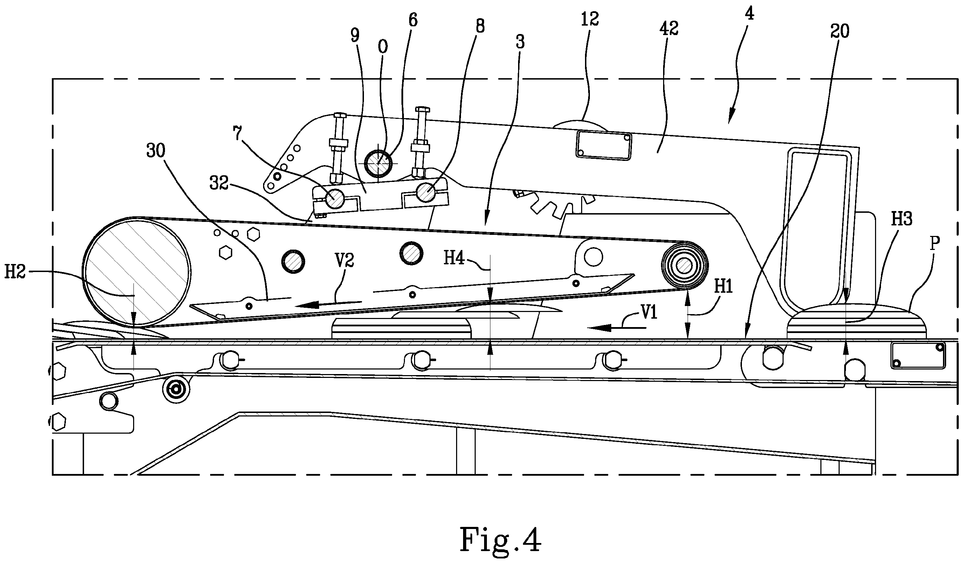

The apparatus 1 then includes a staggering (or separation) station S, represented in particular in figure 4, in which the slices of cut product P are staggered.

Preferably, the conveyor 2 crosses the staggering station S; in detail, the conveyor 2 transports the cut product P to be staggered for a section upstream of the staggering station S, takes it along the station S, in which the slices are staggered, and then transports the staggered slices F for a section downstream of the station itself.

The invention then envisages a staggering device 3, included in the staggering station S which may comprise a movable staggering belt 3, provided to come into contact with the sliced product P, while it is transported by the conveyor 2.

More in general, the staggering device 3 comprises a movable contact surface 30, adapted to touch the sliced and conveyed product P, and further predisposed to move at a second speed V2.

The ratio between the first and the second speed V1, V2 is chosen so as to obtain the staggering or separation of the slices of product P.

In particular, the staggering is obtained when the two speeds V1, V2 do not coincide and, therefore, their ratio is different from the unit.

As will be explained in more detail below, the ratio between the two speeds V1, V2 also determines the degree of staggering of the slices, until their possible separation.

In the preferred and depicted case in which the staggering device 3 includes the mentioned staggering belt 3, it is also provided with the contact surface 30 and may have a length that defines the extension of the staggering station S.

The staggering belt 3 may be a conveyor belt, shorter than that of the conveyor 2, also closed in a loop around related pulleys, one of which being motorized.

The staggering device 3 may be supported by a special upper "rack", i.e. an upper support frame 4 connected to the aforementioned lower frame 5. Preferably, the conveyor 2 moves the product P forward in a parallel direction to the direction along which the contact surface 30 of the staggering device 3 is moving.

The staggering device 3 may be located above the conveyor 2 and in this case the contact surface 30 is defined below the device itself.

In the following, for illustrative convenience, reference will be made to the case in which the conveyor 2 is equipped with the conveyor belt and the staggering device 3 is equipped with the staggering belt.

As shown in the appended figures, the upper branch of the conveyor belt 2 faces the lower branch of the staggering belt 3, defining between the conveying surface 20 and the contact surface 30 a passage for the crossing of the sliced product P.

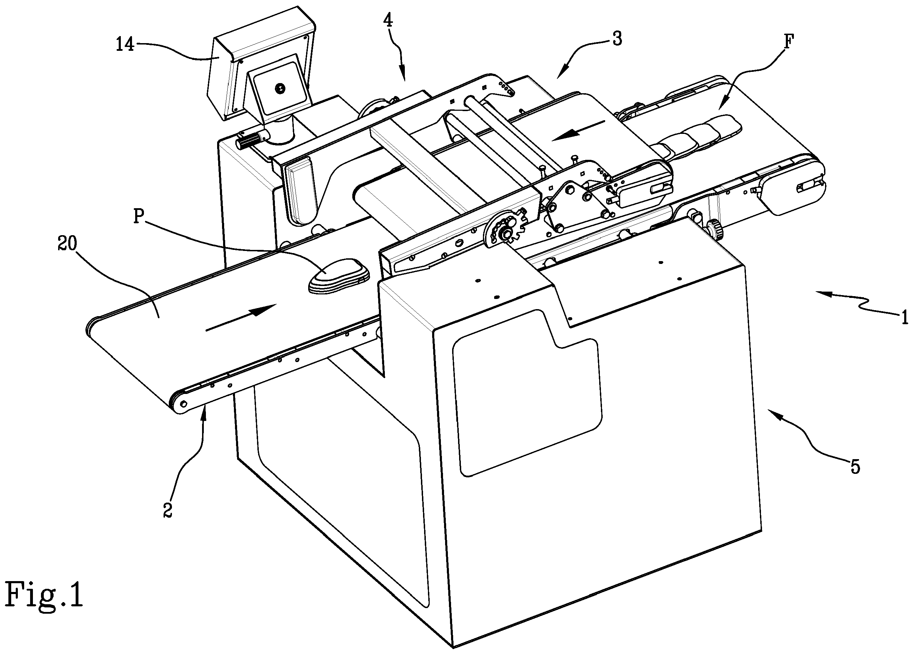

In practice, the product P enters the passage with its original shape and the slices still orderly stacked and superimposed and exits therefrom in the form of staggered (or separated) slices F, as shown schematically in figure 1.

The invention preferably includes position means 6, 7, 8, 9, 11, 90, 91 for adjusting the mutual position between the staggering belt 3 and the conveyor belt 2.

The position means may be adapted to adjust the mutual distance between the staggering belt 3 and the conveyor belt 2.

Furthermore, the position means may be adapted to adjust the mutual inclination between the staggering belt 3 and the conveyor belt 2.

The mutual inclination between the two belts 2, 3 corresponds to the inclination of the ideal planes on which the aforementioned conveying and staggering surfaces 20, 30 lie.

Therefore, the above-mentioned passage may have a constant or variable height along its longitudinal extension, based on whether the belts 2, 3 are parallel or inclined.

In detail, the passage will have an inlet height H1 of the product and an outlet height H3, taken respectively at the ends upstream and downstream of the staggering belt 3, whose heights H1 and H2 may or may not coincide.

In the embodiment shown in the appended figures, the mentioned position means act on the staggering device 3 so as to move it with respect to the conveyor 2.

In this case, the staggering belt 3 may be raised or lowered and may also be adapted to oscillate about an oscillation axis O transverse to the forward direction of the conveyor belt 2.

Prior to illustrating the structural and constructive aspects of the position means, the operation of the invention is explained below.

In use, the staggering belt 3 is arranged with respect to the conveyor belt 2 so that the passage defined between them has a lower maximum height than the height H3 of the sliced product P; in this way, the product P that enters the staggering station S comes into contact with the staggering belt 3, i.e. with the above-mentioned contact surface 30 which moves at a different second speed V2 than the first speed V1 of the conveying surface 20.

Preferably, the second speed V2 is chosen so as to be lower than the first speed V1 and, in the following, reference shall be made by way of example to this case; however, the staggering may also be obtained with a second speed V2 higher than the first speed V1, according to "specular" ways to those described below.

Due to the effect of the difference in speed between the two belts 2, 3, the upper slice, in contact with the staggering belt 3, starts to move at the second speed V2, so that it travels, in the unit of time, a lower distance with respect to the rest of the product P, uncovering an area of the slice below (or penultimate slice) and making the group of slices assume a new total height H4 that will be less than the initial one H3.

According to the height adjustment and the inclination of the staggering belt 3, the penultimate slice will also come into contact with the contact surface 30 and will therefore uncover the slice below making the group of slices assume a new total height that is less than the previous one H4. The movement of the slices will proceed from the top downwards until the total height reached by the group of slices is less than or equal to the minimum passage height defined between the two belts.

Preferably, the staggering belt 3 is inclined "forwards" i.e. so that, with respect to the forward direction of the product P, the mentioned passage has a first inlet height H1 that is greater than the outlet height H2, so as to be able to stagger different slices.

In general, the degree of staggering of the slices, corresponding to its surface that is uncovered, will be a function of the speed difference between the two belts.

Furthermore, the staggering modes are also a function of the difference between the initial height of the sliced product P and the aforementioned heights H1, H2 that the passage presents.

At the outlet of the staggering station S, i.e. when the conveyor 2 has conveyed the slices beyond the staggering belt 3, they are presented in the staggered configuration F represented in the appended figures or in a configuration in which they are separate from one another.

A possible embodiment of the position means and the upper support frame 4 or "rack" mentioned above is described below.

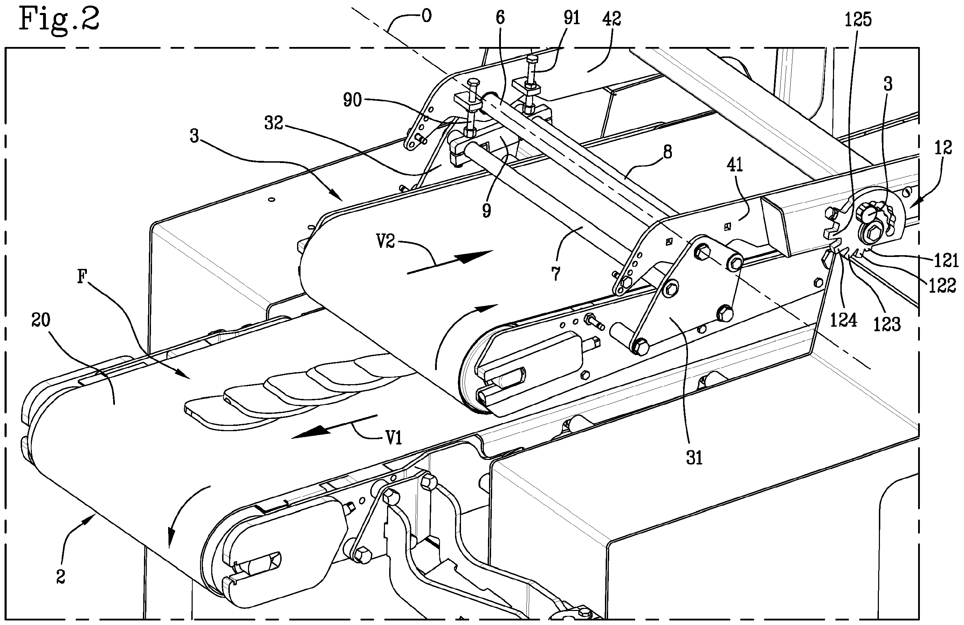

As can be seen from the figures, the oscillation of the staggering belt 3 can be obtained by hinging it to the upper frame 4, for example through a first cross member 6, having its axis coinciding with the aforementioned ideal oscillation axis S, solidly constrained to the belt itself (see in particular figure 2).

In detail, the staggering belt 3 may be fixed to the ends of the first cross member 6 through two opposite brackets 31, 32.

The first cross member 6 is rotatably coupled to the upper frame 4, for example by connecting it to the opposite ends to two parallel lateral sides 41,42.

In this way, as mentioned, the staggering belt 3 is hinged to the upper frame 4 and can therefore oscillate with respect to the conveyor belt 2.

In order to be able to vary and maintain the inclination of the staggering belt 3, the adjustment means comprise inclination means 7, 8, 9, 90, 91 for adjusting the angular range of the oscillation of the belt 3 about the aforementioned axis O.

The inclination means may for example include two further cross members 7, 8 solidly constrained to the staggering belt 3 itself and parallel to the first cross member 6, for example also fixed to the brackets 31, 32 mentioned above.

In detail, the first cross member 6 lies on an ideal plane transverse to the belt (and in particular to the contact surface 30) which is interposed to the transverse planes on which the further two cross members 7, 8 lie; in this way, by adjusting the ranges of the further two cross members 7, 8 with respect to the first cross member 6, an adjustment and potential fixing of the inclination of the upper staggering belt 3 is obtained with respect to the lower conveyor belt 2.

To obtain this, the invention may provide an abutment element 9, specifically a vice, which joins the two further cross members, and two screws 90, 91 rotatably fixed to one of the aforementioned sides 41, 42, adapted to abut in two distinct points of the abutment element 9, placed on opposite sides to the aforementioned ideal plane through which the oscillation axis O passes.

In practice, based on the extension of the screws 90, 91, the end stop of the oscillation is varied in two directions, colloquially "clockwise" and "anticlockwise", of the staggering belt 3 with respect to the oscillation belt O.

Therefore, based on the adjustment of the screws 90, 91 the inclination of the staggering belt 3 may be established with respect to the conveyor belt 2.

If only one of the screws 90, 91 is removed or however is very far from the vice, or another abutment element that joins the two further cross members 7, 8, there will be the possibility to adjust the angular range of the upper belt 3 in one direction only and not the other.

To obtain the variation in distance between the two belts 2, 3, the adjustment means may envisage the features described below with the aid of figures 2, 5 and 6.

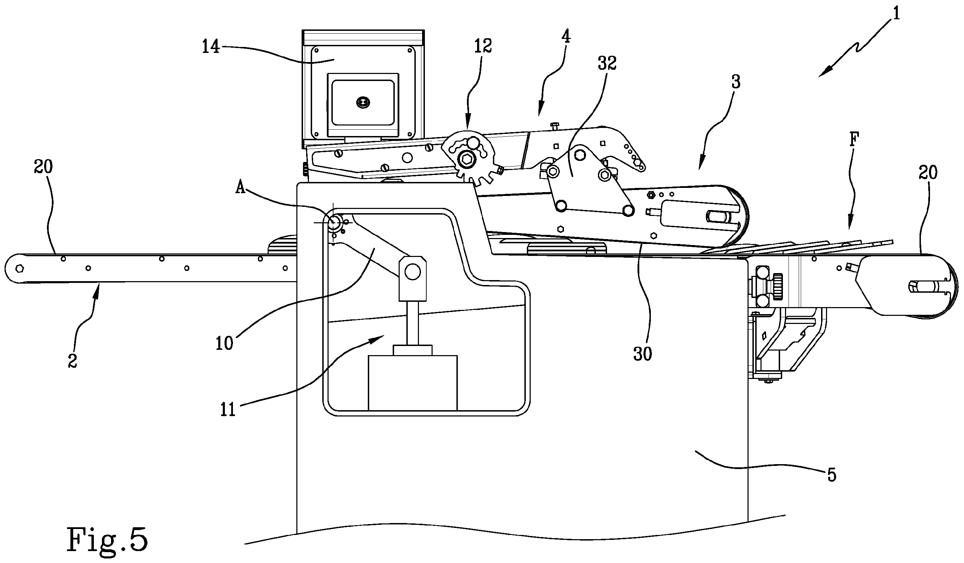

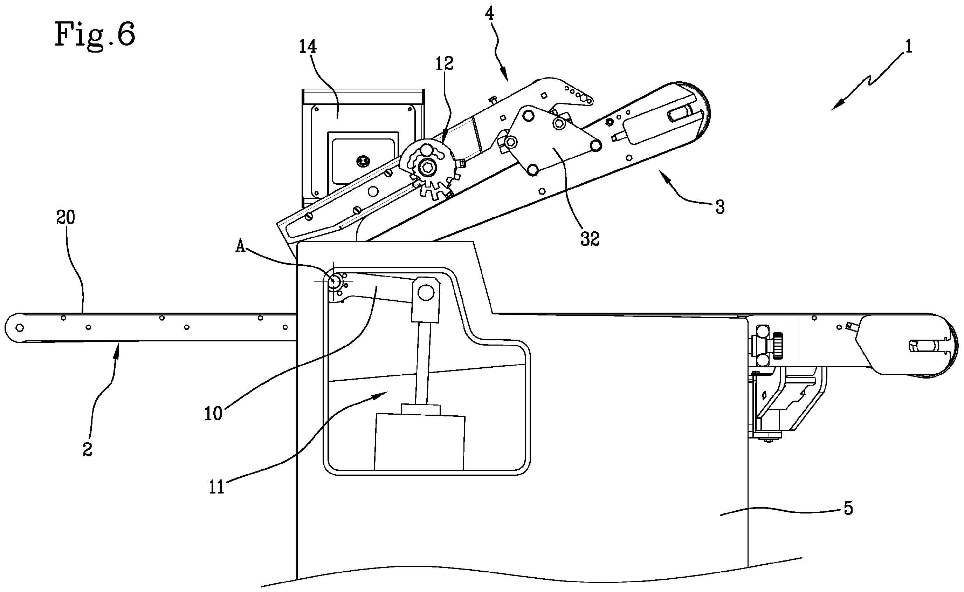

Above all, the upper frame 4 that supports the staggering belt 3 may be hinged, with respect to a horizontal axis A, to the lower frame 5 which supports the entire structure of the apparatus 1 (see figures 5 and 6).

In detail, a lever 10 may be provided, solidly constrained to the upper frame 4, mounted rotatably about the aforementioned horizontal axis A, which passes through the lower frame 5, and activatable by a hydraulic cylinder 11 or another actuator.

In this way, the lifting of the upper frame 4 and, therefore, of the staggering belt 3, may be obtained, as shown in figure 6.

In order to obtain an adjustment of the distance at which the staggering belt 3 is to be placed with respect to the conveyor belt 2, (at least) a spacer device 12 may be provided, shown in detail in figure 2.

Such spacer device 12 is mounted on the upper frame 4, for example connected to one of the aforementioned sides 41, 42, and is adapted to abut the lower frame 5, defining the angular distance between the two frames 4, 5.

In particular, the spacer device 12 may comprise a plurality of spaced elements of different lengths 121, 122, 123,..., and be movable into a plurality of positions in which the lower frame 5 abuts with a different spacer element, defining a different distance between the two frames 4, 5. In the version depicted, the spacer device includes a plate 12, mounted rotatably, about a horizontal axis, on one of the sides, the plate of which conforms a plurality of extensions, or "fingers", which constitute the aforementioned spacer elements, the extensions of which are angularly detached and have increasing lengths.

In this case, the related side may be equipped with a threaded hole for housing a fixing screw 13; at the same time, the plate 12 comprises a plurality of internal seats, for example, afforded in a shaped slot, to allow the plate 12 to be locked / released in different angular positions.

In practice, when the operator wishes to change the distance between the two belts 2, 3, he first activates the actuator 11 which acts on the aforementioned lever 10 to raise the upper frame 4.

For that purpose, an electronic control may be provided, i.e. defined by a user interface which is represented in the drawings by a control display 14. The interface may be connected to a processing unit that activates or deactivates the actuator 11.

After the upper frame 4 has been raised, the operator acts on the spacer device 12 arranging it in the position in which it has in its lower end the spacer element whose length is associated with the desired distance between the two frames 4, 5 and, therefore, between the two belts 2, 3. After this, the operator controls the lowering of the upper frame 4 through the actuator 11, so that the spacer device 12 abuts on the lower frame 5 through the chosen spacer element.

An embodiment of the invention, not shown, is also possible, in which the reciprocal position between the two belts 2, 3 is determined automatically. In this case, the invention envisages non-manual, electronically activated adjustment means and the aforementioned processing unit comprises a position module configured to control the adjustment means so as to vary the reciprocal arrangement between the staggering belt 3 and the conveyor belt 2, in accordance with the initial height of the sliced product P, the number of slices thereof and/or the height of the slices themselves. Also regardless of this alternative embodiment, the processing unit preferably comprises a speed module configured to adjust the movement speed of the staggering belt 3, i.e. the aforementioned second speed V2 at which the contact surface 30 is moving.

In this case, by using the aforementioned user interface, it is possible to adjust the degree of staggering between the slices, i.e. the extension of the portion of slices that is uncovered through the use of the proposed apparatus 1.

More precisely, the speed module may be configured to adjust the second speed V2 based on a staggering parameter set by a user through the interface, to obtain a respective degree of staggering between the slices of product P.

In practice, the processing unit may be connected to the motor which activates the staggering belt 3 and be adapted to adjust its operation so as to vary the speed V2.

Therefore, the processing unit determines how much the ratio between the first and the second speed V1, V2 must be so as to obtain higher or lower staggering according to the settings chosen by the user, who is therefore exempted from performing the individual estimates.

As mentioned above, the first speed V1 is preferably chosen based on the speed of the cutting line placed upstream of the apparatus 1 proposed. However, an embodiment of the invention is also possible in which also the first speed V1 is adjusted by the speed module.

In this particular case, the processing unit is connected to the motorized means of both belts 2, 3.

It is to be noted that the apparatus 1 according to the invention can also be used as a so-called "flattening machine" for slices.

Flattening machines are used to reduce the height of an incoming slice, extending its total area.

As can be understood from the description provided above, the automatic apparatus 1 according to the invention enables the staggering or separation of the slices to be obtained, removing or strongly reducing the manual operations necessary for the composition of the tray.

In this way, a notable reduction in the risk of contamination is obtained, since only one operator is needed for monitoring, which is actually occasional, the operation of the apparatus 1 or the entire cutting and staggering line in general.

The same line is notably shortened since it is not necessary to provide a specific work space for the operators.

Furthermore, both the production costs and the health risks for operators are substantially reduced since labour is enormously limited and the operators no longer have to handle the product P directly.

## Claims

1. An apparatus (1) for staggering or separating slices particularly obtainable by cutting a product (P) such as meat, poultry, fish, vegetables or the like, which apparatus (1) comprises a conveyor (2) able to transport of said cut product (P) and predisposed for moving the product (P) forward at a first speed (V1), the apparatus (1) being **characterized in that** it comprises a staggering device (3) in turn comprising a movable contact surface (30) which is suitable for touching the sliced product (P) and is able to move at a second speed (V2), the ratio between the first speed (V1) and second speed (V2) being such as to obtain the slices of the product (P) to be staggered or separated one from another.

2. An apparatus (1) according to the preceding claim, wherein the second speed (V2) is other than the first speed (V1).

3. An apparatus (1) according to at least one of the preceding claims, wherein said contact surface (30) of the staggering device (3) faces said conveyor (2).

4. An apparatus (1) according to at least one of the preceding claims, wherein the product (P) moved forward by the conveyor (2) in a direction parallel to the direction along which the contact surface (30) of the staggering device (3) is moving.

5. An apparatus (1) according to at least one of the preceding claims, wherein said conveyor comprises a conveyor belt (2), which is suitable for conveying the product (P).

6. An apparatus (1) according to at least one of the preceding claims, wherein the staggering device comprises a movable staggering belt (3), which is provided with the contact surface (30).

7. An apparatus (1) according to claims 5 and 6, wherein the staggering belt (3) is arranged above the conveyor belt (2) of the conveyor.

8. An apparatus (1) according to at least one of the preceding claims, comprising position means (6, 7, 8, 9, 11) for adjusting the mutual position between the staggering device (3) and the conveyor (2).

9. An apparatus (1) according to the preceding claim, wherein said position means (6, 7, 8, 9, 11) are able to adjust the mutual distance between the staggering device (3) and the conveyor (2).

10. An apparatus (1) according to claim 8 or claim 9, wherein said position means are able to adjust the mutual inclination between the staggering device (3) and the conveyor (2).

11. An apparatus (1) according to claim 9 or claim 10, wherein the staggering device (3) can be raised or lowered.

12. An apparatus (1) according to claim 10 or claim 11, wherein the staggering device (3) is able to oscillate about an oscillation axis (O) transverse to the forward direction of the conveyor (2).

13. An apparatus (1) according to at least one of claims 8 to 12, wherein the position means are able to position the staggering device (3) with respect to the conveyor (2) such that a passage is left therebetween, the maximum height of which is less than the height of the sliced product (P), and such inclined that, according to the forward direction of the product (P), said device (3) exhibits a first height upstream that is greater than a second height downstream.

14. An apparatus (1) according to at least one of the preceding claims, comprising a processing unit, which in turn comprises a speed module configured for adjusting at least said second speed (V2) of said contact surface (30).

15. An apparatus according to the preceding claim, wherein said processing unit comprises a user interface and wherein said speed module is configured to adjust said second speed (V2) according to a staggering parameter set by a user via said interface, thereby obtaining a respective staggering degree between the slices of the product (P).

16. An apparatus (1) according to claim 8 and claim 14 or claim 15, wherein said processing unit comprises a position module configured to activate said adjustment means so that the mutual arrangement between the staggering device (3) and the conveyor (2) is varied according to the height of the sliced product (P), the number of slices thereof and/or the height of the slices themselves.
